# FASCICULE DE BREVET EUROPEEN

(11) **EP 2 404 211 B1**
(45) Date de publication et mention de la délivrance du brevet: **22.04.2020**
(21) Numéro de dépôt: 10709813.9
(22) Date de dépôt: 26.02.2010
(51) Int. Cl.: G02C 5/22

(54) **MONTURE DE LUNETTES A CHARNIERES TELESCOPIQUES ET CHARNIERE POUR LA MONTURE**
BRILLENFASSUNG MIT TELESKOPISCHEN SCHARNIEREN UND SCHARNIER FÜR DIE FASSUNG
FRAME FOR SPECTACLES WITH TELESCOPIC HINGES, AND HINGE FOR THE FRAME

(30) Priorité: 03.03.2009 FR 0900965
(43) Date de publication de la demande: 11.01.2012
(73) Titulaire: Delamour, Dominique, 78490 Les Mesnuls (FR); Miklitarian, Alain, 75014 Paris (FR); Chêne, Richard, 92200 Neuilly (FR)
(72) Inventeur: Delamour, Dominique, 78490 Les Mesnuls (FR); Miklitarian, Alain, 75014 Paris (FR); Chêne, Richard, 92200 Neuilly (FR)
(74) Mandataire: Argyma
(86) Numéro de dépôt international: PCT/EP2010/052473
(87) Numéro de publication internationale: WO 2010/100087

(56) Documents cités:
- WO-A-2008/096251
- FR-A- 2 178 828
- FR-A- 2 542 099
- FR-A- 2 796 471
- FR-A- 2 838 530
- FR-A- 2 905 477
- US-A- 5 115 540

## Description

Une monture de lunettes comporte une face avant et deux branches montées articulées, chacune sur un tenon latéral de la face avant par l'intermédiaire d'une charnière.

En position d'ouverture, une branche de lunettes s'étend sensiblement à angle droit du plan général de la face avant.

Une charnière télescopique permet d'ouvrir la branche au-delà de cet angle droit. Elle assure grâce à cette « sur-ouverture » un plus grand confort quand la monture est chaussée sur le nez et elle évite le risque de casser ou déformer la monture et les branches.

Une charnière télescopique de monture de lunettes comporte généralement un ressort qui plaque la branche contre la tête mais autorise précisément la sur-ouverture.

On connaît à ce titre des montures avec charnières télescopiques, telles que celles qui ont été décrites dans les demandes de brevet WO 2008/096251 et FR 2838530.

Une charnière télescopique comporte généralement deux éléments assemblés sur un axe d'articulation et solidaires respectivement d'un tenon de face avant (élément de face) et d'une branche (élément de branche), plus particulièrement de la soie de la branche qui est l'âme sur laquelle elle est formée, quand cette âme ne forme pas la branche à elle seule. Il se peut également que la charnière soit fixée directement à la branche, même quand elle est pourvue d'une soie, la fixation s'opérant sur l'extrémité de la branche qu'on appelle également tenon de branche.

L'élément de branche solidaire de la branche comporte une coulisse montée, d'une part, sur l'axe d'articulation et, d'autre part, dans un fourreau solidaire de l'âme ou de la branche elle-même. Le coulissement de la coulisse dans le fourreau s'effectue contre et sous l'action d'un ressort, généralement de compression, s'étendant également dans le fourreau.

L'élément de face de la charnière coopère avec la portion antérieure du fourreau de l'élément de branche, qu'on appelle socle.

Dans les montures actuelles, au repos branches en position ouverte, l'élément de face et le socle de l'élément de branche d'une charnière télescopique coopèrent par deux surfaces planes (ou deux paires de surfaces planes), en appui l'une contre l'autre, sensiblement parallèles à l'axe d'articulation.

En d'autres termes, les deux éléments de charnière sont joints suivant un plan, sensiblement parallèle au plan général de la face avant et sensiblement perpendiculaire au plan général de la branche de monture associée.

Quand on fait pivoter la branche de monture autour de l'axe d'articulation de la charnière, de la position d'ouverture à la position de fermeture, la surface de joint du socle de l'élément de branche pivote autour de la zone interne de la surface de joint de l'élément de face, jusqu'au basculement brusque de la branche provoqué par la surface de came adjacente à la surface de joint plane de l'élément de face.

Dans ces conditions de pivotement, la compression du ressort de charnière n'est pas totale et la fonction de rappel est un peu molle.

Ne profitant pas pleinement de toute la force des ressorts, les constructeurs ont été contraints de les surdimensionner et les autres pièces de charnière avec.

Dans un souci d'universalité, pour tenir compte de la grande variété des modèles de monture, les demandeurs ont cherché, à performances égales, à réduire la taille des charnières de lunettes, et c'est ainsi qu'ils proposent leur invention.

La présente invention concerne donc une monture de lunettes comportant une face avant, prolongée par deux tenons latéraux, et deux branches articulées sur les tenons autour d'axes d'articulation de deux charnières télescopiques selon l'une des revendications 1 à 9, chacune, à un élément de face solidaire d'un tenon et un élément de branche solidaire d'une branche.

Tout d'abord, on notera que les deux éléments de face et de branche de chaque charnière, en position de repos d'ouverture de la branche, coopèrent par liaison de formes. Si la surface de l'un des éléments présente une zone intermédiaire en creux, la surface de l'autre élément présente donc une zone intermédiaire en relief.

Depuis la zone en creux, la surface de repos d'ouverture de l'élément de face, s'il s'agit de lui, s'incline dans la direction de l'extrémité de la branche associée, si bien que, lors du pivotement de fermeture de la branche pendant lequel deux portions de surface roulent, ou glissent, l'une sur l'autre, le ressort de charnière est considérablement contraint, plus qu'avec deux surfaces planes. Utilisant toute la force du ressort, il peut donc être plus petit que dans l'art antérieur.

Grâce aux zones en creux et en relief des éléments de face et de branche de chaque charnière, la position de repos d'ouverture de la branche associée est donc prédéterminée et immuable. Ce sont des zones de centrage de la branche.

De préférence, la surface de repos d'ouverture de l'élément de branche présentant donc une zone intermédiaire en relief, cette zone en relief est située dans le plan défini par l'axe d'articulation de la charnière et la coulisse associée.

Dans la forme de réalisation préférée de la monture de l'invention, la surface transversale de repos d'ouverture de l'élément de face avant se prolonge par une surface latérale de repos de fermeture également mouvementée, de préférence également complémentaire de la surface transversale de repos d'ouverture de l'élément de branche, avantageusement sensiblement symétrique de la surface transversale de repos d'ouverture par rapport à un plan défini par l'axe d'articulation de la charnière et la zone de jonction des deux surfaces de repos transversale d'ouverture et latérale de fermeture.

De préférence encore, l'élément de branche de chaque charnière comporte un premier ergot de fermeture agencé pour autoriser le rabattement total de la branche contre l'arrière de la face avant et un deuxième ergot de fermeture agencé pour venir en appui contre un épaulement de l'élément de face avant et empêcher le rabattement total de la branche, les deux ergots étant disposés sensiblement symétriquement par rapport au plan défini par l'axe d'articulation et la coulisse correspondante, grâce à quoi en montant une charnière sur une branche d'une monture et une autre charnière identique mais retournée sur l'autre branche, on peut rabattre la première branche sur la face avant et la deuxième branche sur la première en position de fermeture.

L'invention, telle que revendiquée ci-dessus, porte sur une monture de lunettes à deux branches articulées sur une face avant de la monture, chacune par une charnière télescopique.

La face avant peut être pliable autour d'une autre charnière, voire même une charnière télescopique.

Les branches peuvent aussi être pliables autour, chacune, d'une charnière, voire même d'une charnière télescopique.

Ainsi, la monture de lunettes peut comporter de deux à cinq charnières.

Dans ces conditions, les demandeurs entendent également revendiquer une charnière télescopique pour monture de lunettes comportant un premier élément solidaire d'une première partie de monture et un deuxième élément solidaire d'une deuxième partie de monture, le deuxième élément de la charnière comportant une coulisse articulée sur le premier élément et montée coulissante dans un fourreau contre et sous l'action d'un ressort, le premier élément et le fourreau du deuxième élément de la charnière coopérant, dans une position d'ouverture, par au moins deux surfaces transversales de repos d'ouverture complémentaires sensiblement parallèles à l'axe d'articulation de la charnière, charnière caractérisée par le fait que les surfaces de repos d'ouverture des deux éléments de la charnière sont mouvementées, la surface de repos d'ouverture de l'un des deux éléments présentant une zone intermédiaire en creux, la surface de repos d'ouverture de l'autre des éléments présente une zone intermédiaire en relief et les surfaces de repos d'ouverture complémentaires des deux éléments, en position d'ouverture, coopèrent par liaison de formes.

On a envisagé une charnière à deux éléments articulés autour d'un axe unique, c'est-à-dire une charnière à un seul degré de liberté. On pourrait également prévoir sur la monture de l'invention des charnières à deux degrés de liberté, les deux éléments de charnière pouvant pivoter l'un par rapport à l'autre autour de deux axes orthogonaux. Dans ce cas, les charnières sont dites « articulations » dans le métier. Dans ce cas toujours, les caractéristiques inventives de la charnière de l'invention ne concernent que le seul degré de liberté considéré ci-dessus. Alors, au lieu d'un axe d'articulation de charnière, la charnière peut comporter une rotule solidaire du premier élément de charnière sur laquelle est accrochée la coulisse du deuxième élément par un doigt recourbé, grâce à quoi le deuxième élément peut tourner autour de la rotule autour de deux axes orthogonaux dont l'un s'étend à travers un orifice ménagé dans la rotule et recevant le doigt recourbé de la coulisse.

L'invention sera mieux comprise à l'aide de la description suivante de plusieurs formes de réalisation des charnières télescopiques de la monture de lunettes de l'invention, en référence au dessin en annexe, sur lequel
- la figure 1 est une vue en perspective de dessus d'une monture de lunettes classique ;
- la figure 2 est une vue en perspective d'une des charnières télescopiques de la monture de l'invention montée sur l'âme d'une branche, en position d'ouverture de la branche ;
- la figure 3 est une vue en coupe longitudinale de la charnière de la figure 2 ;
- la figure 4 est une vue en perspective du socle du fourreau de l'élément de branche de la charnière de la figure 2 ;
- la figure 5 est une vue en perspective de la charnière de la figure 2, en position de fermeture intermédiaire de la branche ;
- la figure 6 est une vue latérale de la charnière de la figure 2, presque en position de fermeture ;
- la figure 7 est une vue en coupe d'une autre forme de réalisation d'une charnière de la monture de l'invention, en position de branche rabattue sur une autre, et
- la figure 8 est une vue en perspective d'une forme de réalisation particulière de la charnière de l'invention, qualifiée d'articulation, en position de fermeture intermédiaire.

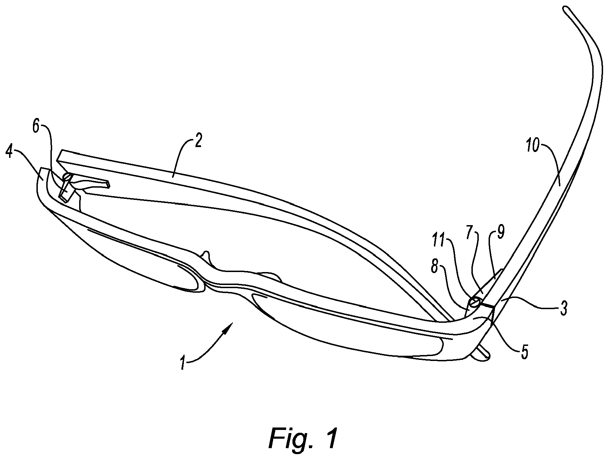

La monture de lunettes, qui va maintenant être décrite, comporte, en référence à la figure 1, une face avant 1 destinée à recevoir des verres généralement optiques, et une branche droite 2 et une branche gauche 3, dans l'exemple représenté, celle-ci 2 rabattue contre l'arrière de la face avant 1 en position de fermeture et celle-là 3, en position d'ouverture sensiblement perpendiculaire au plan général de la face avant 1. La face avant 1 se prolonge latéralement, sensiblement à angle droit, par deux tenons latéraux de face avant 4, 5 sur lesquels sont articulés les branches 2, 3 par l'intermédiaire de deux charnières 6, 7, ici, des charnières dites télescopiques.

Une charnière télescopique - soit par exemple la charnière gauche 7 - comporte un élément de face avant 8, solidaire du tenon de face avant 5, et un élément de branche 9, solidaire de la branche 3 et, plus précisément ici, de l'âme 10 de cette branche sur laquelle elle est formée. Les deux éléments de charnière sont articulés sur un axe d'articulation 11 solidaire de l'élément de face avant 8.

Les charnières 6, 7 des deux branches 2, 3 sont identiques, à un détail prêt qui sera abordé plus loin, et c'est pourquoi la description qui suit ne fait référence qu'à une seule charnière.

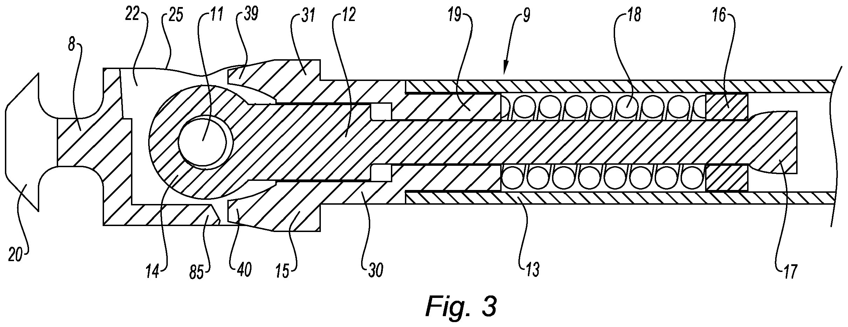

L'élément de branche 9 comporte (figure 3) une coulisse 12, articulée sur l'axe d'articulation 11 et montée dans un fourreau 13 solidaire de l'âme 10. L'extrémité d'articulation de la coulisse 12 est en forme d'anneau 14 à travers lequel s'étend l'axe 11. Le fourreau 13 se prolonge, à l'avant, vers l'extrémité d'articulation 14 de la coulisse, par un socle 15 ici emmanché dans le fourreau 13.

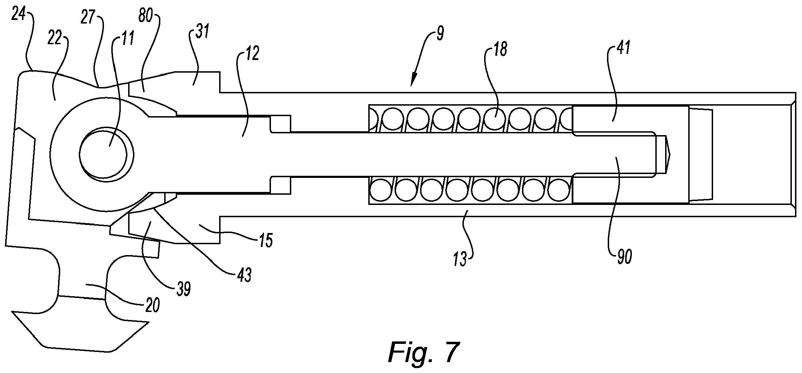

Après montage d'une bague 16 à l'autre extrémité de la coulisse, cette extrémité 17 a été déformée pour précisément retenir cette bague 16. Entre l'extrémité arrière 19 du socle 15 et la bague 16 s'étend un ressort 18, ici de compression, sous et contre l'action duquel la coulisse 12 peut coulisser dans le fourreau 13. On notera que, au lieu d'une bague arrêtée par une déformation de l'extrémité de la coulisse, pour servir d'appui au ressort 18, on pourrait envisager (figure 7) une extrémité de coulisse filetée 40, un bouchon taraudé 41 sur cette extrémité à l'intérieur du fourreau et un insert de retenue monté à l'extrémité du fourreau 13, par exemple vissé dedans.

L'élément de face avant 8 comporte ici un embout d'ancrage 20, pour ancrer l'élément dans le tenon de face avant 5, élément 8 qui se prolonge vers l'arrière, c'est-à-dire vers l'élément de branche 9, par deux zones latérales 21, 22, séparées par l'anneau 14 à surface cylindrique en retrait par rapport aux bords des deux zones. L'anneau 14 est percé d'un alésage 26 de réception de l'axe d'articulation 11.

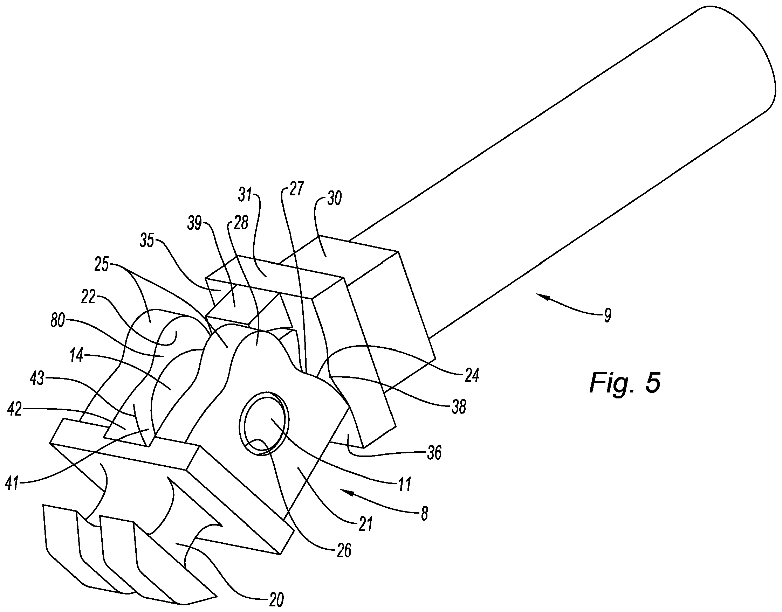

Chaque zone présente (figure 5) un bord arrière transversal 24 et un bord latéral supérieur 25, tous deux de forme particulière sensiblement et globalement parallèles à l'axe d'articulation 11. Le bord arrière transversal 24 de chaque zone présente une surface mouvementée et, en l'espèce, avec une zone intermédiaire 27 en creux. Depuis cette zone en creux 27, la surface s'incline vers l'arrière, dans la direction de l'extrémité de l'élément de branche 9, donc de l'extrémité de la branche 3. Naturellement, les bords transversaux arrière 24 des deux zones 21, 22 s'étendent sur la même surface commune. Chaque bord arrière 24 se prolonge donc par un bord latéral supérieur 25, au-delà d'un coin arrondi 28, le bord supérieur 25 étant ici mouvementé de la même manière que le bord transversal arrière 24 et, même ici, symétrique du bord 24 par rapport à un plan défini par l'axe d'articulation 11 et le coin 28 de jonction des deux bords transversal 24 et supérieur 25. Naturellement encore, les bords supérieurs latéraux 25 des deux joues 21, 22 s'étendent sur la même surface commune.

On notera que l'élément de face avant 8 comporte un embout 20 conformé pour l'ancrage de l'élément dans le tenon de face avant. On pourrait concevoir un élément de face avant qui serait solidarisé au tenon de face avant différemment, par exemple par collage, soudage, vissage...

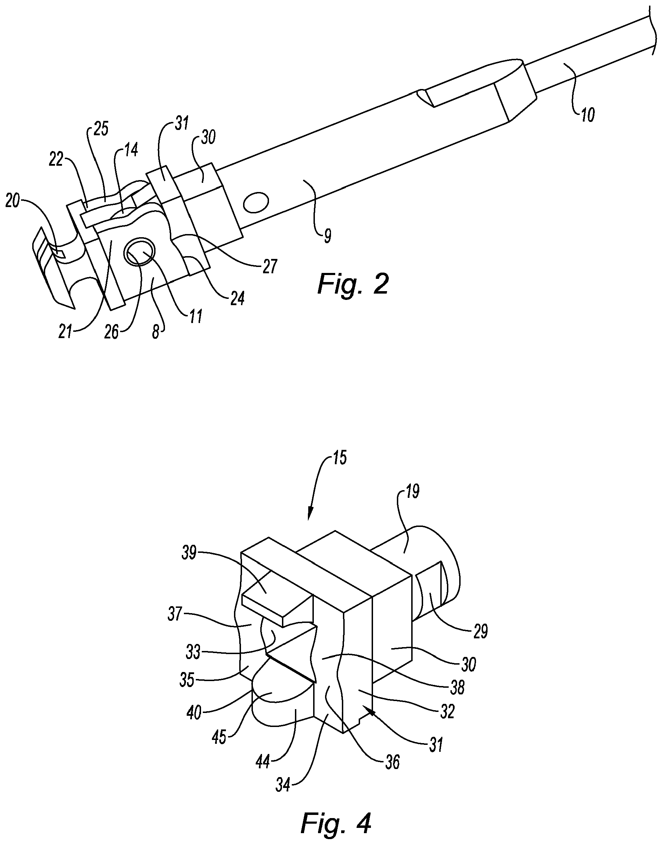

Le socle 15 (figure 4) est emmanché dans le fourreau 13 par une queue arrière tubulaire 19, avec un méplat de fixation 29. Formé sur une petite base parallélépipédique 30, adjacente à la queue 29, se trouve une couronne avant 31 destinée à coopérer avec l'élément de face avant 8. La couronne 31, de forme générale rectangulaire, par son profil transversal extérieur, ou périphérie, 32 et son alésage axial intérieur 33, comporte un rebord avant 34 particulier. Il comporte deux bords latéraux frontaux 35, 36 mouvementés de façon complémentaire de celle des bords transversaux arrière 24 de l'élément de face avant 8. Ainsi, les bords 35, 36 présentent une zone intermédiaire 37, 38 en relief, destinée à épouser la zone intermédiaire en creux 27 des bords transversaux arrière 24 de l'élément de face avant 8.

Les bords mouvementés 35, 36 s'étendent jusqu'aux bords périphériques de la couronne 31. On notera que les zones de relief 37, 38 sont globalement situées dans le plan défini par l'axe d'articulation 11 de la charnière et par la coulisse 12.

Entre les deux bords mouvementés 35, 36 s'étendent entre la périphérie 32 et l'alésage 33, deux ergots de fermeture 39, 40. Ces ergots s'étendent parallèlement à l'axe du fourreau 13 et l'un 40 se rétrécit vers l'avant. Les faces intérieures 40 des joues 21 et 22, du côté des bords latéraux supérieurs 25, s'incurvent vers l'intérieur pour se rejoindre et former une surface quasi-cylindrique 41 chanfreinée par une portion de surface quasi-sphérique 42 formant un épaulement de retenue de l'ergot 39 non rétréci vers l'avant alors que l'ergot rétréci vers l'avant 40 ne peut pas venir buter contre cet épaulement 42. On notera que cet épaulement 42 forme avec la surface cylindrique intérieure 41 une arête curviligne 43.

Ayant décrit la structure de la charnière, son fonctionnement va maintenant pouvoir être abordé.

Les surfaces transversales arrière 24 de l'élément de face avant 8 et les surfaces transversales frontales 35, 36 du socle 15 de l'élément de branche 9 sont des surfaces de repos d'ouverture qui sont complémentaires. Les surfaces supérieures latérales 25 de l'élément de face avant 8 et les surfaces transversales frontales 35, 36 du socle 15 sont des surfaces de repos de fermeture qui sont ici également complémentaires. En position de repos d'ouverture, depuis la zone en creux 27 de l'élément de face avant, la surface 24 s'incline vers l'extrémité de la branche ; de même, depuis la zone en relief 37, 38 du socle 15, la surface 35, 36 s'incline aussi vers l'extrémité de la branche. Lors du pivotement de fermeture de la branche, la surface 35, 36 roule (glisse) sur la surface 24 en contraignant fortement le ressort 18.

Les zones en creux 25 et 27 et les zones en relief 37, 38 des éléments de face avant 8 et de branche 9 constituent des zones de repos de position prédéterminée et immuable. A l'ouverture, il s'agit de zones de centrage de la branche.

Dans l'exemple de réalisation représenté sur les figures 5 - 7, l'ergot de fermeture non rétréci 39 se trouve en position intérieure.

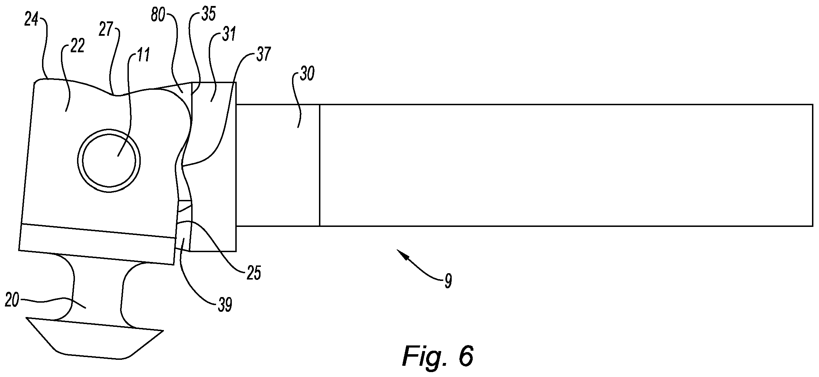

Ainsi quand on fait pivoter la branche 3 de la position d'ouverture (figures 2 et 3) à la position de fermeture (figure 6, 7), les bords transversaux des éléments de charnière roulent les uns sur les autres (figure 5) jusqu'à ce que l'ergot non rétréci 39 vienne en butée contre l'épaulement 42, permettant ainsi à la branche associée de se rabattre sur l'autre branche bien totalement rabattue sur la face avant avec un socle 15 en position inversée pour que l'ergot de fermeture rétréci 40 ne puisse pas venir buter contre l'épaulement 42.

Sur la figure 5, l'élément de branche 9 est en position de « surouverture », l'ergot de fermeture rétréci vers l'avant 40 se trouvant en butée, par sa surface intérieure 45, ou son bord avant 44, contre une languette d'arrêt 45 (figure 3) s'étendant entre les deux joues 21, 22, du côté opposé aux bords latéraux supérieurs 25.

Sur les figures 6, 7, en position de fermeture de l'élément de branche, du fait que l'ergot de fermeture 39 se trouve en butée contre l'épaulement 42 de l'élément de face avant 8, les bords latéraux supérieurs 25 de l'élément de face avant et les bords latéraux frontals 35, 36 ne sont pas plaqués les uns contre les autres.

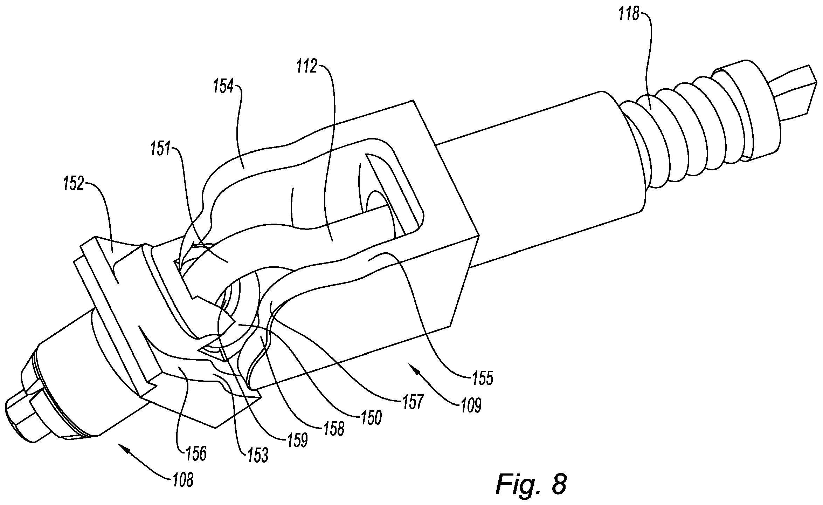

Sur la figure 8, on a représenté une articulation qui est une charnière particulière à deux degrés de liberté, à deux rotations possibles autour de deux axes orthogonaux.

Le premier élément de charnière 108, correspondant à l'élément de la charnière précédente qui est ancré dans la face avant de la monture, est relié au deuxième élément 109, qui correspond à l'élément de branche de la charnière précédente et qui comporte une coulisse 112 et un ressort 118. La liaison des deux éléments 108, 109 s'effectue par une rotule 150 du premier élément et un doigt recourbé 151 prolongeant la coulisse 112. Dans cette variante de réalisation, la rotule 150 est solidaire d'une base 152 de l'élément qui présente deux surfaces latérales mouvementées 156 avec une partie médiane 153 en relief. Le doigt recourbé 151 de la coulisse 112 s'étend entre les deux zones 154, 155 qui, elles, présentent une surface mouvementée 157 avec une partie médiane en creux 158.

La rotule 150 est percée d'un orifice central traversant 159 dans lequel s'étend le doigt recourbé 151. Cette articulation présente donc deux degrés de liberté, l'un autour de l'axe de l'orifice 159, quand les joues 154, 155 du deuxième élément 109 glissent à la périphérie de la rotule 150 et un autre, orthogonal au premier, quand les surfaces mouvementées des deux éléments glissent les unes sur les autres, comme dans la charnière des figures 2-6.

## Revendications

1. Charnière télescopique pour monture de lunettes comportant un premier élément (8) solidaire d'une première partie de monture (5) et un élément (9), solidaire d'une deuxième partie de monture (3), le deuxième élément (9) de la charnière comportant une coulisse (12) articulée sur le premier élément (8) et montée coulissante dans un fourreau (13) contre et sous l'action d'un ressort (18), le premier élément (8) et le fourreau (13) du deuxième élément (9) de la charnière (7) coopérant, en position d'ouverture, par au moins deux surfaces transversales (24, 36) de repos d'ouverture complémentaires, sensiblement parallèles à un axe d'articulation de la charnière (7), charnière **caractérisée par le fait que** les surfaces de repos d'ouverture (24, 36, 35) des deux éléments (8, 9) de la charnière sont mouvementées, la surface de repos d'ouverture (24) de l'un des deux éléments (8, 9) présentant une zone intermédiaire en creux (27),la surface de repos d'ouverture (35, 36) de l'autre des éléments (8, 9) présente une zone intermédiaire en relief (37, 38) et les surfaces de repos d'ouverture complémentaires des deux éléments (8, 9), en position d'ouverture, coopèrent par liaison de formes.

2. Charnière selon larevendication 1 dans laquelle la surface de repos d'ouverture (24) du premier élément (8) présente une zone en creux (27) et s'incline, depuis cette zone en creux, dans la direction de l'extrémité de la deuxième partie de monture associée (3) pour contraindre fortement le ressort de charnière (18) quand les surfaces de repos d'ouverture (24, 36, 35) des deux éléments (8, 9) roulent l'une sur l'autre.

3. Charnière selon la revendication2, dans laquelle les surfaces de repos d'ouverture (35, 36) du deuxième élément (9) présentent une zone intermédiaire en relief (37, 38) qui est située dans le plan défini par l'axe d'articulation (11) de la charnière et la coulisse (12) associée.

4. Charnière selon l'une des revendications 1 à 3, dans laquelle la surface transversale de repos d'ouverture (24) du premier élément (8) se prolonge par une surface latérale de repos de fermeture (25) également mouvementée.

5. Charnière selon la revendication 4, dans laquelle la surface latérale de repos de fermeture (25) du premier élément (8) est complémentaire de la surface transversale de repos d'ouverture (35, 36) du deuxième élément (9).

6. Charnière selon la revendication 5, dans laquelle la surface latérale de repos de fermeture (25) et la surface transversale de repos d'ouverture (24) du premier élément (8) sont symétriques par rapport à un plan défini par l'axe d'articulation (11) de la charnière et la zone (28) de jonction des deux surfaces de repos transversale d'ouverture (24) et latérale de fermeture (25).

7. Charnière selon l'une des revendications 1 à 6, dans laquelle le deuxième élément (9) de la charnière (6, 7) comporte un premier ergot de fermeture (40) agencé pour autoriser le rabattement total de la deuxième partie de monture (2) contre l'arrière de la première partie de monture (1) et un deuxième ergot fermeture (39) agencé pour venir en appui contre un épaulement (42) du premier élément (8) et empêcher le rabattement total de la deuxième partie de monture (3), les deux ergots (39, 40) étant disposés sensiblement symétriquement par rapport au plan défini par l'axe d'articulation (11) et la coulisse correspondante (12).

8. Charnière selon l'une des revendications 1 à 7, dans laquelle les deux éléments (108, 109) sont articulés l'un à l'autre autour de deux axes orthogonaux.

9. Charnière selon la revendication 8, dans laquelle l'un des éléments (108) comporte une rotule (150) et l'autre des éléments (109) comporte un doigt recourbé (151) monté pivotant dans un orifice traversant (159) de la rotule (151) pour le pivotement relatif des deux éléments autour des dits deux axes orthogonaux.

10. Monture de lunettes comportant une face avant (1), prolongée par deux tenons latéraux (4, 5) formant premières parties de ladite monture et deux branches (2, 3) formant deuxièmes parties de ladite monture, les deux branches étant articulées sur les tenons autour d'axes d'articulation (11) de deux charnières télescopiques (6, 7) selon l'une des revendications 1 à 9 , chacune, à un élément de face avant (8) solidaire d'un tenon (5) et un élément de branche (9), solidaire d'une branche (3).

## Patentansprüche

1. Teleskopisches Scharnier für Brillenfassung, aufweisend ein erstes Element (8), das mit einem ersten Fassungsabschnitt (5) fest verbunden ist, und ein Element (9), das mit einem zweiten Fassungsabschnitt (3) fest verbunden ist, wobei das zweite Element (9) des Scharniers einen am ersten Element (8) angelenkten und in einem Futteral (13) gegen und unter der Wirkung einer Feder (18) gleitend angebrachten Schieber (12) aufweist, wobei das erste Element (8) und das Futteral (13) des zweiten Elements (9) des Scharniers (7) in geöffneter Position anhand von mindestens zwei komplementären transversalen Öffnungs-Ruheflächen (24, 36) zusammenwirken, die etwa parallel zu einer Gelenkachse des Scharniers (7) sind, wobei das Scharnier **dadurch gekennzeichnet ist, dass** die Öffnungs-Ruheflächen (24, 36, 35) der zwei Elemente (8, 9) des Scharniers bewegt werden, wobei die Öffnungs-Ruhefläche (24) von einem der zwei Elements (8, 9) eine hohle Übergangszone (27) aufweist, wobei die Öffnungs-Ruhefläche (35, 36) des anderen der Elemente (8, 9) eine Relief-Übergangszone (37, 38) aufweist und die komplementären Öffnungs-Ruheflächen der zwei Elemente (8, 9) in geöffneter Position durch Formverbindung zusammenwirken.

2. Scharnier nach Anspruch 1, wobei die Öffnungs-Ruhefläche (24) des ersten Elements (8) eine hohle Zone (27) aufweist und sich ab dieser hohlen Zone in Richtung des Endes des zugeordneten zweiten Fassungsabschnitts (3) neigt, um die Scharnierfeder (18) stark zu beanspruchen, wenn die Öffnungs-Ruheflächen (24, 36, 35) der zwei Elemente (8, 9) übereinander rollen.

3. Scharnier nach Anspruch 2, wobei die Öffnungs-Ruheflächen (35, 36) des zweiten Elements (9) eine Relief-Übergangszone (37, 38) aufweisen, die sich in der Ebene befindet, die von der Gelenkachse (11) des Scharniers und des zugeordneten Schiebers (12) festgelegt ist.

4. Scharnier nach einem der Ansprüche 1 bis 3, wobei sich die transversale Öffnungs-Ruhefläche (24) des ersten Elements (8) durch eine ebenfalls bewegte seitliche Verschluss-Ruhefläche (25) verlängert.

5. Scharnier nach Anspruch 4, wobei die seitliche Verschluss-Ruhefläche (25) des ersten Elements (8) zu der transversalen Öffnungs-Ruhefläche (35, 36) des zweiten Elements (9) komplementär ist.

6. Scharnier nach Anspruch 5, wobei die seitliche Verschluss-Ruhefläche (25) und die transversale Öffnungs-Ruhefläche (24) des ersten Elements (8) in Bezug auf eine Ebene symmetrisch sind, die von der Gelenkachse (11) des Scharniers und der Vereinigungszone (28) der zwei Flächen, der transversalen Öffnungs-Ruhefläche (24) und seitlichen Verschluss-Ruhefläche (25), festgelegt ist.

7. Scharnier nach einem der Ansprüche 1 bis 6, wobei das zweite Element (9) des Scharniers (6, 7) eine erste Verschlussnase (40) aufweist, die eingerichtet ist, um das vollständige Herunterklappen des zweiten Fassungsabschnitts (2) gegen die Rückseite des ersten Fassungsabschnitts (1) zu gestatten, und eine zweite Verschlussnase (39), die eingerichtet ist, um sich auf einem Schulter (42) des ersten Elements (8) abzustützen und das vollständige Herunterklappen des zweiten Fassungsabschnitts (3) zu verhindern, wobei die zwei Nase (39, 40) in Bezug auf die Ebene, die von der Gelenkachse (11) und dem entsprechenden Schieber (12) festgelegt ist, etwa symmetrisch angeordnet sind.

8. Scharnier nach einem der Ansprüche 1 bis 7, wobei die zwei Elemente (108, 109) um zwei orthogonale Achsen aneinander angelenkt sind.

9. Scharnier nach Anspruch 8, wobei eines der Elemente (108) ein Kugelgelenk (150) aufweist und das andere der Elemente (109) einen gekrümmten Finger (151) aufweist, der schwenkend in einer Durchgangsöffnung (159) des Kugelgelenks (151) für das relative Schwenken der zwei Elemente um die zwei orthogonalen Achsen angebracht ist.

10. Brillenfassung, aufweisend eine Vorderseite (1), die von zwei seitlichen Zapfen (4, 5) verlängert wird, welche erste Abschnitte der Fassung bilden, und zwei Bügel (2, 3), welche zweite Abschnitte der Fassung bilden, wobei die zwei Bügel an den Zapfen um Gelenkachsen (11) von zwei teleskopischen Scharnieren (6, 7) nach einem der Ansprüche 1 bis 9 angelenkt sind, jeder an einem Vorderseitenelement (8), das mit einem Zapfen (5) fest verbunden ist, und einem Bügelelement (9), das mit einem Bügel (3) fest verbunden ist.

## Claims

1. A telescopic hinge for a spectacle frame comprising a first element (8) integral with a first frame part (5) and an element (9), integral with a second frame part (3), the second element (9) of the hinge comprising a slide (12) hinged to the first element (8) and slidably mounted in a sleeve (13) against and under the action of a spring (18), the first element (8) and the sleeve (13) of the second element (9) of the hinge (7) cooperating, in an opening position, through at least two complementary opening resting transverse surfaces (24, 36), substantially parallel to a hinging axis of the hinge (7), which hinge is **characterised in that** the opening resting surfaces (24, 36, 35) of both elements (8, 9) of the hinge are active, the opening resting surface (24) of one of both elements (8, 9) having a hollow intermediate zone (27), the opening resting surface (35, 36) of the other of the elements (8, 9) has a relief intermediate zone (37, 38) and the complementary opening resting surfaces of both elements (8, 9), in an opening position, cooperate through form-fitting.

2. The hinge according to claim 1, wherein the opening resting surface (24) of the first element (8) has a hollow zone (27) and is tilted, from this hollow zone, in the direction of the end of the associated second frame part (3) to strongly load the hinge spring (18) when the opening resting surfaces (24, 36, 35) of both elements (8, 9) roll on each other.

3. The hinge according to claim 2, wherein the opening resting surfaces (35, 36) of the second element (9) have a relief intermediate zone (37, 38) which is located in the plane defined by the hinging axis (11) of the hinge and the slide (12) associated.

4. The hinge according to one of claims 1 to 3, wherein the opening resting transverse surface (24) of the first element (8) extends to an also active closing resting lateral surface (25).

5. The hinge according to claim 4, wherein the closing resting lateral surface (25) of the first element (8) is complementary to the opening resting transverse surface (35, 36) of the second element (9).

6. The hinge according to claim 5, wherein the closing resting lateral surface (25) and the opening resting transverse surface (24) of the first element (8) are symmetric relative to a plane defined by the hinging axis (11) of the hinge and the junction zone (28) of both opening resting transverse (24) and closing resting lateral (25) surfaces.

7. The hinge according to one of claims 1 to 6, wherein the second element (9) of the hinge (6, 7) comprises a first closing lug (40) arranged to allow the second frame part (2) to be completely folded down against the back of the first frame part (1) and a second closing lug (39) arranged to come in abutment against a shoulder (42) of the first element (8) and prevent the second frame part (3) from being completely folded down, both lugs (39, 40) being disposed substantially symmetrically relative to the plane defined by the hinging axis (11) and the corresponding slide (12).

8. The hinge according to one of claims 1 to 7, wherein both elements (108, 109) are hinged to each other around two orthogonal axes.

9. The hinge according to claim 8, wherein one of the elements (108) comprises a bowl joint (150) and the other of the elements (109) comprises a bended finger (151) pivotably mounted in a through hole (159) of the bowl joint (151) for both elements to be relatively pivoted around said two orthogonal axes.

10. A spectacle frame comprising a front face (1), extending to two lateral tenons (4, 5) forming first parts of said frame and two branches (2, 3) forming second parts of said frame, both branches being hinged on the tenons around hinging axes (11) of two telescopic hinges (6, 7) according to one of claims 1 to 9, each to a front face element (8) integral with a tenon (5) and a branch element (9), integral with a branch (3).
